# EUROPEAN PATENT APPLICATION

(11) **EP 4 685 994 A1**
(43) Date of publication of application: **28.01.2026**
(21) Application number: 24856756.2
(22) Date of filing: 16.08.2024
(51) Int. Cl.: H01M 50/595, H01M 50/586, H01M 10/052

(54) **ELECTRODE ASSEMBLY FOR SECONDARY BATTERY AND LITHIUM SECONDARY BATTERY INCLUDING SAME**

(30) Priority: 18.08.2023 KR 20230108378
(71) Applicant: LG Energy Solution, Ltd., Seoul 07335 (KR)
(72) Inventor: LEE, Hyejin, Daejeon 34122 (KR)
(74) Representative: Goddar, Heinz J.
(86) International application number: PCT/KR2024/012230
(87) International publication number: WO 2025/042144

(57) **Abstract**

The present disclosure relates to an electrode assembly for a secondary battery,
which has a structure in which a laminate including a sheet-shaped positive electrode, a sheet-shaped negative electrode, and a sheet-shaped separator interposed between the sheet-shaped positive electrode and the sheet-shaped negative electrode is wound,
wherein an electronically conductive tape is attached to the outer surface of the sheet-shaped negative electrode not facing the sheet-shaped positive electrode, in the width direction of the sheet-shaped negative electrode perpendicular to the winding direction of the laminate, at a portion corresponding to the winding end of the sheet-shaped positive electrode.

## Description

### [TECHNICAL FIELD]

### Cross Citation with Related Application(s)

This application claims priority from and the benefit of Korean Patent Application No. 10-2023-0108378 filed on August 18, 2023 in the Korean Intellectual Property Office, the disclosure of which is incorporated herein by reference in its entirety.

The present disclosure relates to an electrode assembly for a secondary battery and a lithium secondary battery comprising the same.

### (BACKGROUND]

With the technology development and increased demand for mobile devices, demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Based on the shape of a battery case, a secondary battery may be classified into a cylindrical battery having an electrode assembly mounted in a cylindrical metal container, a prismatic battery having an electrode assembly mounted in a prismatic metal container, and a pouch type battery having an electrode assembly mounted in a pouch-shaped case made of an aluminum laminate sheet. Among them, the cylindrical battery has the advantages in that it has relatively large capacity and is structurally stable.

The electrode assembly mounted in the battery case is a power generation device capable of charging/discharging and including a stacked structure of positive electrode/separator/negative electrode. The electrode assembly is classified into a jelly roll type, a stacked type and a stacked/folded type. The jelly roll type is configured such that a long sheet-shaped positive electrode and a long sheet-shaped negative electrode, to which active materials are applied, are wound with a separator being interposed therebetween, the stacked type is configured such that a plurality of positive electrodes and negative electrodes having a predetermined size are sequentially stacked while a separator being interposed therebetween, and the stacked/folded type is a combination of the jelly roll type and the stacked type. Among such electrode assemblies, the jelly roll type electrode assembly has the advantages in that it is manufactured most easily and have high energy density per weight.

However, in recent years, the need for high capacity has increased, and the load on the positive electrode has increased, thus increasing the brittleness of the positive electrode. Thereby, as the strength of the end of the positive electrode increases and charge/discharge progresses, the force applied to the negative electrode corresponding to the end of the positive electrode increases, which causes a problem that the negative electrode is broken.

However, when the negative electrode is broken, a phenomenon is observed in which the electrical connection is broken in a 1+1 tap structure, i.e., when both the positive electrode and the negative electrode have a 1 tap structure, so that the operation of the lithium secondary battery whose life is not exhausted is ended.

Therefore, there is a need to develop a lithium secondary battery technology that can solve such problems.

### [DETAILED DESCRIPTION OF THE INVENTION]

### [Technical Problem]

Therefore, it is an object of the present disclosure to provide an electrode assembly for a secondary battery which can delay disconnection of a negative electrode portion corresponding to the end of the positive electrode in an electrode assembly having a wound type structure, which occurs according to charge and discharge of the secondary battery.

It is another object of the present disclosure to provide an electrode assembly for a secondary battery in which the operation of the secondary battery is not ended even if the negative electrode is disconnected by the end of the positive electrode due to charge and discharge of the secondary battery.

### [Technical Solution]

According to one embodiment of the present disclosure, there is provided an electrode assembly for a secondary battery,
which has a structure in which a laminate including a sheet-shaped positive electrode, a sheet-shaped negative electrode, and a sheet-shaped separator interposed between the sheet-shaped positive electrode and the sheet-shaped negative electrode is wound,
wherein an electronically conductive tape is attached to the outer surface of the sheet-shaped negative electrode not facing the sheet-shaped positive electrode, in the width direction of the sheet-shaped negative electrode perpendicular to the winding direction of the laminate, at a portion corresponding to the winding end of the sheet-shaped positive electrode.

The electronically conductive tape may have a resistance of 0.01 Ω/cm² to 100 Ω/cm², and may have an elastic force.

Specifically, the electronically conductive tape may have a structure in which an electronically conductive adhesive layer is formed on a substrate, and specifically, it may be a single-sided tape or a double-sided tape in which the electronically conductive adhesive layer is formed on one surface or both surfaces of the substrate.

In this case, the electronically conductive adhesive layer may contain a carbon material for imparting electronic conductivity.

Such an electronically conductive tape may be, for example, a carbon tape.

Specifically, the electronically conductive tape may be attached to the outer surface of the sheet-shaped negative electrode in the width direction of the sheet-shaped negative electrode at a portion corresponding to the winding end of the sheet-shaped positive electrode, and specifically, it may be attached to have an extension width of 0.5 mm to 35 mm on both sides based on the winding end edge of the sheet-shaped positive electrode.

Meanwhile, the length of the sheet-shaped negative electrode in the winding direction may be longer than the length of the sheet-shaped positive electrode in the winding direction, and the electrode assembly may have a structure in which the sheet-shaped positive electrode is wound so that it is located on the inner side.

Further, the electrode assembly may be an electrode assembly having a 1+1 tab structure in which the sheet-shaped positive electrode includes one positive electrode tab, and the sheet-shaped negative electrode includes one negative electrode tab.

In this case, the sheet-shaped positive electrode may be a free edge positive electrode in which a positive electrode non-coated portion where no positive electrode active material layer is formed is formed in the middle, and the positive electrode tab may be located on the positive electrode non-coated portion.

Further, the sheet-shaped negative electrode may have a structure in which a negative electrode non-coated portion where no negative electrode active material layer is formed is formed on one side or both sides, and the negative electrode tab is located on the negative electrode non-coated portion formed at the winding end.

On the other hand, according to another embodiment of the present disclosure, there is also provided a lithium secondary battery comprising the electrode assembly.

### [BRIEF DESCRIPTION OF THE DRAWINGS]

FIG. 1 is a cross-sectional view of a laminate before the electrode assembly is wound.
FIG. 2 is a schematic diagram showing the inner surface of an electrode assembly in a state where the laminate of FIG. 1 is partially wound.
FIG. 3 is a schematic diagram showing the outer surface of an electrode assembly in a state where the laminate of FIG. 1 is partially wound.

### [DETAILED DESCRIPTION OF THE EMBODIMENTS]

Throughout the description, when a portion is referred to as "including" or "comprising" a certain component, it means that the portion can further include other components, without excluding the other components, unless otherwise stated.

Throughout the description, the term "about or appropriately" or "substantially" is intended to have meanings close to numerical values or ranges specified with an allowable error and intended to prevent accurate or absolute numerical values disclosed for understanding of the present disclosure from being illegally or unfairly used by any unconscionable third party.

The terms "width," "length," and "breadth" as used here are based on those defined in the specification.

Further, throughout the description, when referred to as "planar", it means when a target portion is viewed from the upper side, and when referred to as "cross-sectional", it means when a target portion is viewed from the side of a cross section cut vertically.

Based on the above definitions, the embodiments of the present disclosure will be described in detail below with reference to the accompanying drawings. However, portions that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

The drawings are provided for illustrative purposes only, and the invention is not limited thereby, and is defined only by the scope of the claims which will describe below.

According to an embodiment of the present disclosure, there is provided an electrode assembly for a secondary battery,
which has a structure in which a laminate including a sheet-shaped positive electrode, a sheet-shaped negative electrode, and a sheet-shaped separator interposed between the sheet-shaped positive electrode and the sheet-shaped negative electrode is wound,
wherein an electronically conductive tape is attached to the outer surface of the sheet-shaped negative electrode not facing the sheet-shaped positive electrode, in the width direction of the sheet-shaped negative electrode perpendicular to the winding direction of the laminate, at a portion corresponding to the winding end of the sheet-shaped positive electrode.

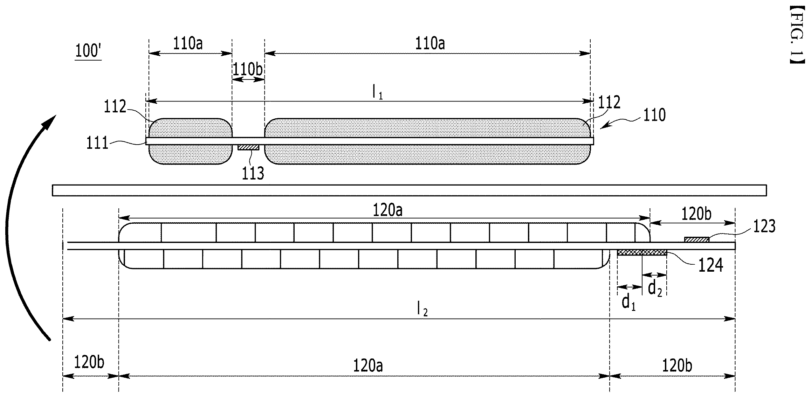

FIG. 1 is a cross-sectional view of a laminate before the electrode assembly is wound.

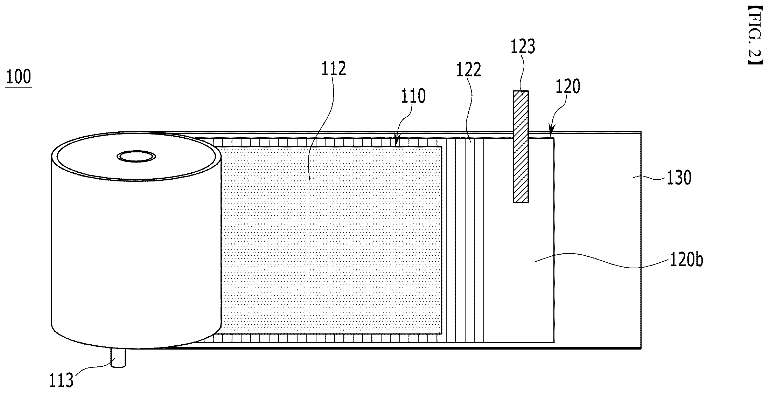

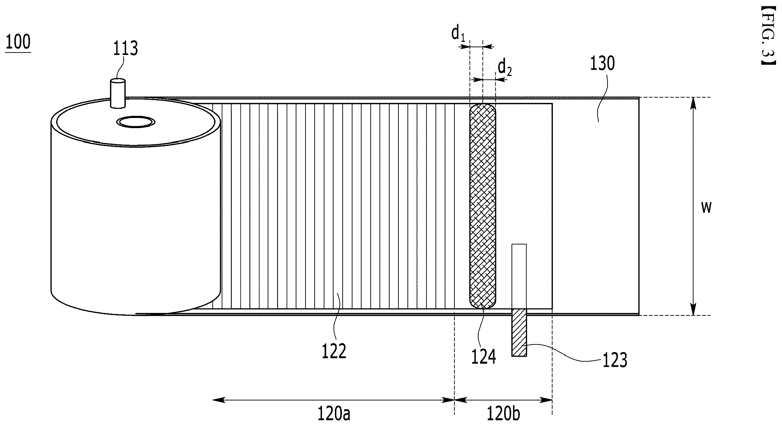

FIG. 1 illustrates a cross-sectional view of a laminate before the electrode assembly is wound. FIG. 2 illustrates a schematic diagram showing the inner surface of an electrode assembly in a state where the laminate of FIG. 1 is partially wound, and FIG. 3 illustrates a schematic diagram showing the outer surface of an electrode assembly in a state where the laminate of FIG. 1 is partially wound.

Referring to FIGS. 1 to 3, the electrode assembly 100 has a structure in which a laminate 100' including a sheet-shaped positive electrode 110, a sheet-shaped negative electrode 120, and a sheet-shaped separator 130 interposed between the sheet-shaped positive electrode 110 and the sheet-shaped negative electrode 120 is wound.

Herein, the length l₂ of the sheet-shaped negative electrode 120 in the winding direction may be longer than the length l₁ of the sheet-shaped positive electrode 110 in the winding direction.

In addition, the sheet-shaped positive electrode 110 may be wound in the direction of the arrow so that it is located on the inner side.

Furthermore, the sheet-shaped positive electrode 110 may include one positive electrode tab 113, and the sheet-shaped negative electrode 120 may include one negative electrode tab 123.

Although not limited thereto, in the case of an electrode assembly having a 1+1 tab structure in which tabs are included one by one in each electrode, if a short circuit occurs at the end of the positive electrode due to charge and discharge of a secondary battery, the negative electrode tap is broken and the operation of the secondary battery is interrupted.

In this case, as the operation is interrupted even before the life of the secondary battery is exhausted, the loss thereof is very large.

Therefore, the electrode assembly according to the present disclosure can be more suitably applied in the case of a 1+1 tab structure as described above.

Of course, a 1+2 tab structure including two negative electrode tabs can also be used effectively since it can prevent a sudden increase in resistance.

Meanwhile, the sheet-shaped positive electrode 110 includes a positive electrode coated portion 110a where a positive electrode active material layer 112 is formed on a positive electrode current collector 111, and a positive electrode non-coated portion 110b where no positive electrode active material layer 112 is formed, and may be a free edge positive electrode having a structure in which the positive electrode non-coated portion 110b is formed between the positive electrode coated portions 110a rather than at the end, i.e., in the middle of the sheet-shaped positive electrode 110.

In this case, the positive electrode tab 113 may be located on this positive electrode non-coated portion 110b. In this case, the positive electrode tab 113 may be attached to the positive electrode non-coated portion 110b using welding, adhesive tape or conductive adhesive, or may be manufactured so as to include the positive electrode tab 113 when manufacturing the current collector 111, and is not limited as long as it forms an electrical connection in the form where the positive electrode tab 113 is located on the positive electrode non-coated portion 110b.

In addition, the drawing illustrates a structure in which the positive electrode tab 113 is located in a direction facing the sheet-shaped negative electrode 120, but is not limited thereto.

Herein, the positive electrode active material layer 112 is manufactured by applying, drying, and rolling a slurry containing the positive electrode active material onto the positive electrode current collector 111. Herein, the slurry may further include a conductive agent, a binder, or a filler in addition to the positive electrode active material.

The positive electrode current collector may generally have a thickness of 3 to 500 µm. The positive electrode current collector is not particularly limited as long as it has high conductivity without causing any chemical changes in a battery, and for example, copper, stainless steel, aluminum, nickel, titanium, calcined carbon, or aluminum or stainless steel whose surface is treated with carbon, nickel, titanium, silver, or the like may be used. In addition, the current collector may have fine protrusions and depressions formed on a surface thereof to enhance adherence of a positive electrode active material. For example, the current collector may be used in various forms such as a film, a sheet, a foil, a net, a porous body, a foaming body, and a non-woven fabric structure.

Further, the positive electrode active material is a compound capable of reversible intercalation and deintercalation of lithium, and specifically, it may include lithium metal oxide containing lithium and at least one metal such as iron, cobalt, manganese, nickel or aluminum.

Specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1, etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, and p1+q1+r1=2), etc.), lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2, and s2 are atomic fractions of each independent elements, wherein 0<p2<1, 0<q2<1, 0<r2<1, 0<s2<1, and p2+q2+r2+s2=1), etc.), lithium iron phosphate (e.g., Li₁₊ₐFe₁₋ₓMₓ(PO_{4-b})X_{b} (where M is at least one selected from Al, Mg, and Ti, X is at least one selected from F, S and N, -0.5 ≤ a ≤ +0.5, 0 ≤ x ≤ 0.5, 0 ≤ b ≤ 0.1), or the like, and any one thereof or a compound of two or more thereof may be used.

Among these, the positive electrode active material includes lithium; and lithium metal oxide containing two or more transition metals selected from the group consisting of nickel, manganese, cobalt, and aluminum.

The conductive material is a component for further improving the conductivity of the positive electrode active material. Such a conductive material is not particularly limited as long as it has conductivity without causing any chemical change in the battery, and, for example, a conductive material, including: carbon powder such as carbon black, acetylene black, Ketjen black, channel black, furnace black, lamp black, or thermal black; graphite powder such as natural graphite with a well-developed crystal structure, artificial graphite, or graphite; conductive nanomaterials such as carbon nanofibers or carbon nanotubes; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used. Among these, the conductive material includes conductive nanomaterials such as carbon nanotubes or carbon nanofibers, which can further lower the resistance of the lithium metal battery and further enhance output characteristics.

Typically, the conductive material may be contained in an amount of 1 to 20% by weight, or 1 to 15% by weight, or 1 to 10% by weight, based on the total weight of the positive electrode active material layer.

The binder selectively included in the positive electrode active material layer is a component that assists in the bonding between the positive electrode active material and the conductive material and in the bonding to the current collector. Examples of the binder may include polyvinylidene fluoride, polyvinyl alcohol, carboxymethylcellulose(CMC), starch, hydroxypropyl cellulose, regenerated cellulose, polyvinylpyrrolidone, polytetrafluoroethylene, polyethylene(PE), polypropylene, ethylene-propylene-diene monomer, sulfonated ethylene-propylene-diene monomer, nitrile-based rubber, styrene-butadiene rubber, fluororubber or the like. Mixtures or copolymers of two or more selected from these may also be used.

Typically, the binder may be included in an amount of 1 to 20% by weight, or 1 to 15% by weight, or 1 to 10% by weight based on the total weight of the positive electrode active material layer.

In addition, a filler as a component for inhibiting the expansion is not particularly limited as long as it can inhibit the expansion of the electrode without causing any chemical change in the battery, and examples thereof may include olefinic polymers such as polyethylene and polypropylene; fibrous materials such as glass fibers and carbon fibers.

Meanwhile, the sheet-shaped negative electrode 120 includes a negative electrode coated portion 120a where a negative electrode active material layer 122 is formed on a negative electrode current collector 121, and a negative electrode non-coated portion 120b where no negative electrode active material layer 122 is formed, wherein the negative electrode non-coated portion 120b may be formed on one side or both sides.

In this case, the negative electrode tab 123 may be located on the negative electrode non-coated portion 120b which is located at the winding end among such negative electrode non-coated portions. In this case, the negative electrode tab 123 may be attached on the negative electrode non-coated portion 120b using welding, adhesive tape, or conductive adhesive, or may be manufactured so as to include the negative electrode tab 123 when manufacturing the current collector 121, and is not limited as long as it forms an electrical connection in the form where the negative electrode tab 123 is located on the negative electrode non-coated portion 120b.

In addition, the drawing illustrates a structure in which the negative electrode tab 123 is located in a direction facing the sheet-shaped positive electrode 110, but the structure is not limited thereto.

Herein, the negative electrode active material layer 122 is manufactured by applying, drying, and rolling a slurry containing the negative electrode active material on the negative electrode current collector 121. Herein, the slurry may, in addition to the negative electrode active material, further include a conductive agent, a binder, or a filler, etc., as described for the positive electrode.

The negative electrode current collector may generally have a thickness of 3 µm to 500 µm. Further, the negative electrode current collector is not particularly limited as long as it has high conductivity without causing any chemical changes in a battery, and for example, may be one selected from the group consisting of copper, stainless steel, aluminum, nickel, titanium, calcined carbon, copper that is surface-treated with dissimilar metal, stainless steel that is surface-treated with dissimilar metal, and an aluminum-cadmium alloy. The current collector may have fine protrusions and depressions formed on a surface thereof to enhance adherence of a positive electrode active material, and may be used in various forms such as a film, a sheet, a foil, a net, a porous body, a foaming body, and a non-woven fabric structure.

The negative active material may include at least one carbon-based material selected from the group consisting of graphite, amorphous hard carbon, low-crystalline soft carbon, carbon black. Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The sheet-shaped separator 130 may be made from an olefin polymer such as polyethylene or polypropylene, glass fiber, or the like in the form of a sheet, multilayer film, microporous film, woven fabric, nonwoven fabric, or the like, but is not necessarily limited thereto. The sheet-shaped separator may be an insulating thin film having high ion permeability and mechanical strength, and the pore diameter of the separator may be generally in the range of 0.01 to 10 µm, and the thickness may be generally in the range of 5 to 300 µm, but is not limited thereto.

Further, the sheet-shaped separator may be integrated with the electrolyte and be interposed between the sheet-shaped positive electrode and the sheet-shaped negative electrode in the form of an electrolyte membrane or electrolyte film. In this case, the electrolyte membrane or electrolyte film may be in the form containing the above-mentioned lithium salt and non-aqueous organic solvent in a polymer matrix, and a well-known polymer-based solid electrolyte or the like may be used as the polymer matrix. In this case, it may be a semi-solid battery used in combination with a liquid electrolyte injected during the manufacture of the secondary battery.

Meanwhile, such an electrode assembly 100 has a problem in that the sheet-shaped negative electrode 120 portion facing the winding end of the sheet-shaped positive electrode 110 is subjected to continuous impact by the expansion of the sheet-shaped positive electrode 110 due to charge and discharge, and is broken, which causes a problem that a short circuit occurs.

However, since the electrical connection of the negative electrode tab 123 is ended due to this breakage, the operation of the secondary battery is interrupted before the life of the secondary battery is exhausted.

Thus, in order to prevent such problems, the electrode assembly 100 according to an embodiment of the present disclosure has a structure in which an electronically conductive tape 124 is attached to the outer surface of the sheet-shaped negative electrode 120 not facing the sheet-shaped positive electrode 110, in a portion corresponding to the winding end of the sheet-shaped positive electrode 110, in the direction of the width (w) of the sheet-shaped negative electrode 120 perpendicular to the winding direction of the laminate 100'.

In this case, the electronically conductive tape 124 may be attached to the outer surface of the sheet-shaped negative electrode 120 to have an extension width (d1, d2) of 0.5 mm to 35 mm on both sides based on the winding end edge of the sheet-shaped positive electrode 110.

Specifically, the width (d1, d2) on both sides based on the edge may be 1 mm to 30 mm, and more specifically, 5 mm to 20 mm.

If the width is formed too thinly outside the above range, it is difficult to achieve the effect intended by the present disclosure, and if the width is formed too thickly, it may affect the negative electrode active material layer, which is not preferable.

In addition, in order to achieve the effect intended by the present disclosure, the electronically conductive tape 124 must exhibit electronic conductivity, whereby the resistance of the electronically conductive tape 124 may be 0.01 Ω/cm² to 100 Ω/cm², specifically, 0.1 Ω/cm² to 80 Ω/cm², and more specifically, 5 Ω/cm² to 30 Ω/cm².

If the resistance is too high outside the above range, it is not possible to obtain the effect intended by the present disclosure, that is, the effect of preventing interruption of operation of the secondary battery by maintaining the conductivity even if the sheet-shaped negative electrode 120 is broken, and it is difficult to manufacture a tape having a resistance lower than the above, which is not preferable.

In addition, the electronically conductive tape 124 may have an elastic force, and such elastic force may have the effect of delaying the breakage and short circuit of the sheet-shaped negative electrode 120.

In this case, the electronically conductive tape 124 may have a structure in which an electronically conductive adhesive layer is formed on a substrate in order to offer electronic conductivity, and more specifically, the electronically conductive adhesive layer may be a single-sided tape or a double-sided tape formed on one surface or both surfaces of the substrate.

The substrate is not limited as long as it is a material that can be used in a secondary battery, however, the substrate may be, for example, a polymer substrate, more specifically, a polyolefin substrate, and more specifically, for example, polyethylene (PE) or polypropylene (PP).

Meanwhile, the adhesive layer may include an adhesive and a conductive material. Herein, the adhesive may be a polymer material having adhesiveness, and may include, for example, at least one material selected from the group consisting of polycarbonate(PC), polyacrylate(PA), rubber, and styrene.

Further, the conductive material is not limited to a material having conductivity, but may be, for example, a carbon material or a metal or semi-metal material, and specifically, may be a carbon material.

Most specifically, the electronically conductive tape may be a carbon tape.

By the attachment of the electronically conductive tape 124, the electrode assembly 100 of the present disclosure has the effect of delaying the occurrence of a short circuit in the sheet-shaped negative electrode 120 corresponding to the end of the sheet-shaped positive electrode 110. Furthermore, it can maintain electronic conductivity even if a short circuit occurs in the sheet-shaped negative electrode 120, and thus enable continuous operation of the secondary battery, thereby improving the life of the secondary battery.

Therefore, according to another embodiment of the present disclosure, a lithium secondary battery comprising the electrode assembly is provided.

Herein, the lithium secondary battery has a structure in which the electrode assembly and the lithium non-aqueous electrolyte are embedded in a battery case.

The lithium non-aqueous electrolyte may include a non-aqueous organic solvent and a lithium salt.

The lithium salt included in the lithium non-aqueous electrolyte is used as a medium for transferring ions within the secondary battery. For example, lithium salts may contain Li+ as cation, and may contain together an anion selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻.

Specifically, the lithium salt may include at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl) imide, LiN(SO₂F)₂), LiBETI (lithium bis(perfluoroethanesulfonyl)imide, LiN(SO₂CF₂CF₃)₂ and LiTFSI (lithium bis(trifluoromethanesulfonyl)imide, LiN(SO₂CF₃)₂).

The concentration of the lithium salt can be appropriately changed within a range that is normally usable, and can be contained in the electrolyte at a concentration of 0.5 M to 6 M, or a concentration of 1 M to 5 M.

On the other hand, the type of non-aqueous organic solvent that can be contained in the electrolyte is not particularly limited, and any organic solvent that has been previously known to be applicable to electrolytes for lithium ion batteries can be used. Examples of such organic solvents include at least one selected from the group consisting of a carbonate-based solvent, an ether-based solvent, a nitrile-based solvent, a phosphate-based solvent, and a sulfone-based solvent.

More specifically, the carbonate-based solvent may include dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate methyl (2,2,2-trifluoroethyl) carbonate, or the like, and the phosphate-based solvent may include trimethyl phosphate, triethyl phosphate, 2-(2,2,2-trifluoroethoxy)-1,3,2-dioxaphosphorane 2-oxide, or the like.

Also, the ether-based solvent may include tetrahydrofuran derivatives such as dibutyl ether, tetraglyme, diglyme, dimethoxy ethane, or 2-methyl tetrahydrofuran, and the nitrile-based solvent may include succinonitrile, adiponitrile, sebaconitrile, acetonitrile, propionitrile, or the like. In addition, the sulfone-based solvent may include dimethyl sulfone, ethylmethyl sulfone, sulforane, or the like.

### [Description of Symbols]

- 100:: electrode assembly,
- 110:: sheet-shaped positive electrode,
- 120:: sheet-shaped negative electrode,
- 130:: sheet-shaped separator,
- 124:: electronically conductive tape.

### [Industrial Applicability]

The electrode assembly for a secondary battery according to the present disclosure has the effect of delaying the occurrence of a short circuit in the sheet-shaped negative electrode corresponding to the end of the sheet-shaped positive electrode by attaching an electronically conductive tape to the outer surface of the sheet-shaped negative electrode corresponding to the end of the sheet-shaped positive electrode.

In addition, the electrode assembly for a secondary battery according to the present disclosure can maintain electronic conductivity even if a short circuit occurs at the sheet-shaped negative electrode corresponding to the end of the sheet-shaped positive electrode, thereby enabling continuous operation of the secondary battery and improving the life of the secondary battery.

## Claims

1. An electrode assembly for a secondary battery,
which has a structure in which a laminate including a sheet-shaped positive electrode, a sheet-shaped negative electrode, and a sheet-shaped separator interposed between the sheet-shaped positive electrode and the sheet-shaped negative electrode is wound,
wherein an electronically conductive tape is attached to the outer surface of the sheet-shaped negative electrode not facing the sheet-shaped positive electrode, in the width direction of the sheet-shaped negative electrode perpendicular to the winding direction of the laminate, at a portion corresponding to the winding end of the sheet-shaped positive electrode.

2. The electrode assembly according to claim 1, wherein:
the electronically conductive tape has a resistance of 0.01 Ω/cm² to 100 Ω/cm².

3. The electrode assembly according to claim 1, wherein:
the electronically conductive tape has an elastic force.

4. The electrode assembly according to claim 1, wherein:
the electronically conductive tape has a structure in which an electronically conductive adhesive layer is formed on a substrate.

5. The electrode assembly according to claim 4, wherein:
the electronically conductive tape is a tape in which the electronically conductive adhesive layer is formed on one surface or both surfaces of the substrate.

6. The electrode assembly according to claim 4, wherein:
the electronically conductive adhesive layer contains a carbon material.

7. The electrode assembly according to claim 1, wherein:
the electronically conductive tape is a carbon tape.

8. The electrode assembly according to claim 1, wherein:
the electronically conductive tape is attached to the outer surface of the sheet-shaped negative electrode to have an extension width of 0.5 mm to 35 mm on both sides based on the edge of the winding end of the sheet-shaped positive electrode.

9. The electrode assembly according to claim 1, wherein:
the length of the sheet-shaped negative electrode in the winding direction is longer than the length of the sheet-shaped positive electrode in the winding direction.

10. The electrode assembly according to claim 1, wherein:
the electrode assembly has a structure in which the sheet-shaped positive electrode is wound so that it is located on the inner side.

11. The electrode assembly according to claim 1, wherein:
the sheet-shaped positive electrode includes one positive electrode tab, and the sheet-shaped negative electrode includes one negative electrode tab.

12. The electrode assembly according to claim 11, wherein:
the sheet-shaped positive electrode is a free edge positive electrode in which a positive electrode non-coated portion where no positive electrode active material layer is formed in the middle, and the positive electrode tab is located on the positive electrode non-coated portion.

13. The electrode assembly according to claim 11, wherein:
the sheet-shaped negative electrode has a structure in which a negative electrode non-coated portion where no negative electrode active material layer is formed is formed on one side or both sides, and the negative electrode non-coated portion is formed so as to include a winding end.

14. The electrode assembly according to claim 13, wherein:
the negative electrode tab is located on the negative electrode non-coated portion formed at the winding end.

15. A lithium secondary battery comprising the electrode assembly according to any one of claims 1 to 14.
